# EUROPEAN PATENT APPLICATION

(11) **EP 4 550 110 A1**
(43) Date of publication of application: **07.05.2025**
(21) Application number: 23905825.8
(22) Date of filing: 15.12.2023
(51) Int. Cl.: G06F 3/14, G06F 21/84

(54) **DEVICE MANAGEMENT METHOD, AND ELECTRONIC DEVICE**

(30) Priority: 21.12.2022 CN 202211650267
(71) Applicant: Huawei Technologies Co., Ltd., Shenzhen, Guangdong 518129 (CN)
(72) Inventor: ZHOU, Xueer, Shenzhen, Guangdong 518129 (CN); LU, Yuedong, Shenzhen, Guangdong 518129 (CN); LI, Ronggen, Shenzhen, Guangdong 518129 (CN); ZHOU, Xingchen, Shenzhen, Guangdong 518129 (CN); LIU, Cheng, Shenzhen, Guangdong 518129 (CN); LI, Xiao, Shenzhen, Guangdong 518129 (CN); QIAO, Puyao, Shenzhen, Guangdong 518129 (CN)
(74) Representative: Epping - Hermann - Fischer
(86) International application number: PCT/CN2023/139085
(87) International publication number: WO 2024/131661

(57) **Abstract**

A management and control method and an electronic device are provided. The management and control method includes: A first device enables collaboration with a second device; when an input management and control status is enabled, and a location of a first operation corresponding to a first event is in a first area, the first device blocks transfer of the first event (S4021); and when the input management and control status is enabled, and the location of the first operation corresponding to the first event is in a second area, the first device releases input management and control, where the first area and the second area each are a part of a display area of the first device (S4022). The management and control method restricts a local operation of a user on the first device, prevents the local operation of the user on the first device from affecting the collaboration between the second device and the first device, and reserves a bypass area, so that the first device can autonomously release the management and control status when the input management and control status is enabled. After the management and control status is released, the user of the first device can freely perform an operation. This helps improve user experience.

## Description

This application claims priority to Chinese Patent Application No. 202211650267.6, filed with the China National Intellectual Property Administration on December 21, 2022 and entitled "DEVICE MANAGEMENT METHOD AND ELECTRONIC DEVICE", which is incorporated herein by reference in its entirety.

### TECHNICAL FIELD

This application relates to the terminal field, and in particular, to a device management method and an electronic device.

### BACKGROUND

With development of electronic devices, a user has an increasingly high requirement on the electronic devices. For example, the user usually expects to perform a cross-device operation or perform multi-screen collaboration. For example, the user may perform a reverse control operation on a projection side through projection reverse control. However, in this scenario, the user has more requirements. How to meet the user requirement and improve user experience is an urgent problem to be resolved.

### SUMMARY

This application provides a device management method and an electronic device. The method helps improve user experience.

According to a first aspect, a device management method is provided, where the method is applied to a system including a first device and a second device, an interface of the first device is projected to the second device for display, and the method includes: The first device receives a first event, where the first event is triggered by a first operation, and the first operation is a local operation on the first device; and
when an input management and control status is enabled, and a location of the first operation is in a first area, the first device blocks transfer of the first event, where the input management and control status being enabled indicates that the local operation on the first device is managed and controlled; or
when the input management and control status is enabled, and the location of the first operation is in a second area, the first device adjusts the input management and control status to disabled, where the input management and control status being disabled indicates that the local operation on the first device is not managed and controlled, the first area and the second area each are a part of a display area of the first device, and the first area and the second area do not overlap.

It may be understood that the device management method may be expanded to a system including at least two devices, where a first device in the at least two devices can receive user operation information from a second device in the at least two devices, and perform an action indicated by the user operation information. In other words, the device management method is not limited to a projection scenario.

In the technical solutions of this application, when the first device collaborates with and the second device and input management and control is enabled, and a local input event occurs on the first device, processing on the first event, for example, rejecting the first event or triggering a bypass procedure, may be determined based on a location of an operation corresponding to the first event. In this way, the local operation of the user on the first device can be restricted, and the local operation of the user on the first device is prevented from affecting the collaboration, for example, projection, between the second device and the first device. In addition, a bypass area is reserved, so that the first device can autonomously release the management and control status when the input management and control status is enabled. After the management and control status is released, the user of the first device can freely perform an operation. This helps improve user experience.

With reference to the first aspect, in some implementations of the first aspect, when the input management and control status is disabled, the first device allows the transfer of the first event.

In this manner, when the input management and control status is not enabled, the local input event on the first device is not restricted, and the user of the first device can freely perform an operation.

With reference to the first aspect, in some implementations of the first aspect, the first device receives a first message, where the first message indicates to adjust the input management and control status to enabled.

To be specific, the first device may enable the input management and control after receiving the first message. In other words, the first device enables the input management and control after receiving an enable indication. In this manner, when the first device does not receive the enable indication, the user of the first device may freely operate the first device, or the user of the first device may freely use the first device. When the input management and control needs to be enabled, the first device enables the input domain management and control after receiving the indication, so that the input management and control can be enabled as required, and free use of the user of the first device is ensured as much as possible.

It should be understood that a manner in which the first device enables the input management and control status is not limited thereto.

With reference to the first aspect, in some implementations of the first aspect, when the input management and control status is enabled, the first device displays a full-screen transparent floating window, where the full-screen transparent floating window covers the display area of the first device.

It should be understood that the first device is an electronic device, for example, may be a tablet computer or a mobile phone. Alternatively, the first device may be a display, for example, an in-vehicle screen, or a plurality of displays of a same electronic device. If the input management and control status of the first device is enabled, it means that the first device is managed and controlled, and that the full-screen transparent floating window covers the first device may be understood as that the full-screen transparent floating window covers the electronic device or display that is managed and controlled.

With reference to the first aspect, in some implementations of the first aspect, the full-screen transparent floating window includes the second area.

In other words, the bypass area on the first device is set on the full-screen transparent floating window.

With reference to the first aspect, in some implementations of the first aspect, the first event corresponds to screen-off processing, and when the input management and control status is disabled, the method further includes: The first device performs screen-off processing.

In other words, the first event corresponds to the screen-off processing, and when the input management and control is not enabled, the first device performs screen-off processing.

With reference to the first aspect, in some implementations of the first aspect, the first device receives indication information from the second device, where the indication information indicates to turn off a screen, and the indication information is triggered by a local reverse control operation of the second device; and that the first device performs screen-off processing includes: The first device performs screen-off processing based on the indication information.

In other words, in this manner, the first device performs screen-off processing because of the reverse control operation of the second device. For example, the second device reversely controls the first device to turn off the screen.

With reference to the first aspect, in some implementations of the first aspect, the first device receives a second event, where the second event is triggered by a reverse control operation from the second device; and the first device performs processing corresponding to the second event in response to the second event.

With reference to the first aspect, in some implementations of the first aspect, the first device receives a second event, where the second event is triggered by a reverse control operation from the second device; and the first device performs processing corresponding to the second event in response to the second event.

In other words, after the screen of the first device is turned off, the second device can still control the first device through projection reverse control.

With reference to the first aspect, in some implementations of the first aspect, when the processing corresponding to the second event invokes a sensitive sensor of the first device, the first device blocks the invoking.

When the screen of the first device is turned off, the sensitive sensor rejects to be invoked, so that user privacy of the first device can be protected.

According to a second aspect, a device management method is provided, where the method is applied to a system including a first device and a second device, an interface of the first device is projected to the second device for display, and the method includes: The first device establishes a connection to the second device; the first device performs a screen-off operation; and when a sensitive sensor of the first device is invoked, the first device blocks the invoking.

In other words, the device management method may be applied to a system including at least two devices, where a first device in the at least two devices can receive user operation information from a second device in the at least two devices, and perform an action indicated by the user operation information.

In the method, in a case in which the first device establishes the connection to the second device, and a screen is turned off, when the sensitive sensor of the first device is invoked, the invoking may be rejected, to protect privacy of the first device or a user of the first device. This helps improve user experience.

With reference to the second aspect, in some implementations of the second aspect, that the first device establishes a connection to the second device includes: The first device enables collaboration with the second device, and the first device projects a display interface of the first device to the second device.

With reference to the second aspect, in some implementations of the second aspect, indication information is received, where the indication information indicates to turn off a screen; and that the first device performs a screen-off operation includes: The first device performs the screen-off operation based on the indication information.

Optionally, the indication information may be sent by the second device to the first device.

According to a third aspect, an apparatus is provided, where the apparatus includes: a display unit, configured to display a collaboration interface; and a processing unit, configured to receive a first event, and determine, based on an input management and control status, whether to block the first event, where the input management and control status indicates whether a first operation of the first device is managed and controlled, the first operation is an input operation on the first device, and the input management and control status includes enabled or disabled. When the input management and control status is enabled, and a location of the first operation corresponding to the first event is in a first area, the processing unit blocks the first event; and when the input management and control status is enabled, and the location of the first operation corresponding to the first event is in a second area, the processing unit triggers a bypass procedure, where the first area and the second area each are a part of a display area of the first device.

With reference to the third aspect, in some implementations of the third aspect, when the input management and control status is not enabled, the processing unit allows the first event.

With reference to the third aspect, in some implementations of the third aspect, the processing unit is further configured to receive a first message, where the first message indicates to adjust the input management and control status to enabled.

With reference to the third aspect, in some implementations of the third aspect, when the input management and control status is enabled, the processing unit is configured to display a full-screen transparent floating window, and the display unit is configured to display the full-screen transparent floating window, where the full-screen transparent floating window covers the display area of the first device.

With reference to the third aspect, in some implementations of the third aspect, the full-screen transparent floating window includes the second area.

With reference to the third aspect, in some implementations of the third aspect, the first event corresponds to screen-off processing, and when the input management and control status is disabled, the processing unit is configured to perform screen-off processing.

In other words, the first event corresponds to screen-off processing, and when the input management and control is not enabled, the first device performs screen-off processing.

With reference to the third aspect, in some implementations of the third aspect, the processing unit receives indication information from the second device, where the indication information indicates to turn off a screen, and the indication information is triggered by a local reverse control operation of the second device; and the processing unit performs screen-off processing based on the indication information.

With reference to the third aspect, in some implementations of the third aspect, the processing unit is configured to receive a second event, where the second event is triggered by a reverse control operation from the second device; and the processing unit is configured to perform processing corresponding to the second event in response to the second event.

With reference to the third aspect, in some implementations of the third aspect, when the processing corresponding to the second event invokes a sensitive sensor of the first device, the processing unit is further configured to block the invoking.

According to a fourth aspect, an apparatus is provided. The apparatus includes: a display unit, configured to display an application interface; and a processing unit, configured to establish a connection to a second device. The processing unit is further configured to perform a screen-off operation, and when a sensitive sensor of the first device is invoked, the processing unit blocks the invoking.

With reference to the fourth aspect, in some implementations of the fourth aspect, the processing unit is configured to enable collaboration, and the processing unit is further configured to project a display interface of the processing unit to the second device.

With reference to the fourth aspect, in some implementations of the fourth aspect, the processing unit is configured to receive indication information, where the indication information indicates to turn off a screen; and the processing unit performs the screen-off operation based on the indication information.

According to a fifth aspect, a computer program product including instructions is provided. When the computer program product runs on an electronic device, the electronic device is enabled to perform the management and control method in the first aspect and/or the second aspect, or any one of the implementations of the first aspect and/or the second aspect.

According to a sixth aspect, a computer-readable storage medium is provided. The storage medium may be non-volatile. The storage medium includes instructions. When the instructions are run on an electronic device, the electronic device is enabled to perform the management and control method in the first aspect and/or the second aspect, or any one of the implementations of the first aspect and/or the second aspect.

According to a seventh aspect, a chip system is provided, including: a processor, configured to invoke and run a computer program from a memory, so that an electronic device on which the chip system is installed performs the management and control method in the first aspect and/or the second aspect, or any one of the implementations of the first aspect and/or the second aspect.

According to an eighth aspect, a device management method is provided, where the method is applied to an electronic device, and is applied to a system including a first device and a second device. An interface of the first device is projected to the second device for display, and the method includes:
The first device receives a first reverse control event, where the first reverse control event is triggered by a local reverse control operation of the second device;
the first device performs processing corresponding to the first reverse control event in response to the first reverse control event;
the first device receives a first local event, where an operation corresponding to the first local event is in a first area;
in response to the first local event, the first device does not perform processing corresponding to the first local event;
the first device receives a second local event, where an operation corresponding to the second local event is in a second area, the first area and the second area each are a part of a display area of the first device, and the first area and the second area do not overlap; and
the first device performs processing corresponding to the second local event in response to the second local event.

In other words, the second device may perform projection reverse control on the first device. When the first device is operated in the first area, because the first area is under input management and control, the first device does not perform corresponding processing, and when the first device is operated in the second area, the management and control over the first device may be released.

It may be understood that the device management method may be extended to a system including at least two devices, where a first device in the at least two devices can receive user operation information from a second device in the at least two devices, and perform an action indicated by the user operation information. In other words, the device management method is not limited to a projection scenario.

With reference to the eighth aspect, in some implementations of the eighth aspect, processing corresponding to the second local event is adjusting an input management and control status of the first device to be disabled, where the input management and control status being disabled indicates that a local operation on the first device is not managed and controlled.

With reference to the eighth aspect, in some implementations of the eighth aspect, after that the first device performs processing corresponding to the second local event in response to the second local event, the method further includes:
The first device receives a third local event, where an operation corresponding to the third local event is at any location in the display area of the first device; and
the first device performs processing corresponding to the third local event in response to the third local event.

In other words, after the management and control over the first device is released by performing the operation in the second area, an operation may be performed on the first device at any location in the display area of the first device, and the first device may perform corresponding processing.

With reference to the eighth aspect, in some implementations of the eighth aspect, the first device receives a second reverse control event, where the second reverse control event is triggered by a local reverse control operation of the second device;
the first device performs a screen-off operation in response to the second reverse control event;
the first device receives a third reverse control event, where the third reverse control event is triggered by a local reverse control operation of the second device; and
the first device starts a first application in response to the third reverse control event.

In other words, after the second device reversely controls the first device to turn off a screen, the second device can still perform the reverse control operation on the first device, to start the first application.

With reference to the eighth aspect, in some implementations of the eighth aspect, the first device receives a fourth local event, where the fourth local event indicates the first device to turn off a screen;
the first device performs a screen-off operation in response to the fourth local event;
the first device receives a fourth reverse control event, where the fourth reverse control event is triggered by a local reverse control operation of the second device; and
the first device starts a first application in response to the fourth reverse control event.

In other words, after the first device locally performs the screen-off operation, the second device can still perform the reverse control operation on the first device, to start the first application.

With reference to the eighth aspect, in some implementations of the eighth aspect, when the first application invokes a sensitive sensor of the second device, that the invoking fails is prompted on the first device and/or the second device.

According to a ninth aspect, a device management system is provided, where the system includes the first device and the second device in any one of the implementations of the eighth aspect.

### BRIEF DESCRIPTION OF DRAWINGS

FIG. 1 is a diagram of a hardware structure of an electronic device according to an embodiment of this application;
FIG. 2 is a block diagram of a software structure of an electronic device according to an embodiment of this application;
FIG. 3 is a diagram of an application scenario 200 according to an embodiment of this application;
FIG. 4 is a diagram of a management and control method according to an embodiment of this application;
FIG. 5 is a group of GUIs according to an embodiment of this application;
FIG. 6 is a schematic flowchart of interaction between an in-vehicle infotainment and a tablet according to an embodiment of this application;
FIG. 7 is another group of GUIs according to an embodiment of this application;
FIG. 8 is another schematic flowchart of interaction between an in-vehicle infotainment and a tablet according to an embodiment of this application;
FIG. 9 is another group of GUIs according to an embodiment of this application;
FIG. 10 is a schematic flowchart of interaction between an in-vehicle infotainment, a mobile phone, and a tablet according to an embodiment of this application;
FIG. 11 is a schematic flowchart of interaction between different in-vehicle screens according to an embodiment of this application;
FIG. 12 is a diagram of a management and control method according to an embodiment of this application;
FIG. 13 is a schematic flowchart of interaction between an in-vehicle infotainment and a tablet according to an embodiment of this application;
FIG. 14 is a block diagram of an apparatus according to an embodiment of this application; and
FIG. 15 is a diagram of a structure of an electronic device according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of embodiments of this application, "a plurality of" means two or more than two.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

A method provided in embodiments of this application may be applied to an electronic device like a mobile phone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), or an intelligent car. A specific type of the electronic device is not limited in embodiments of this application.

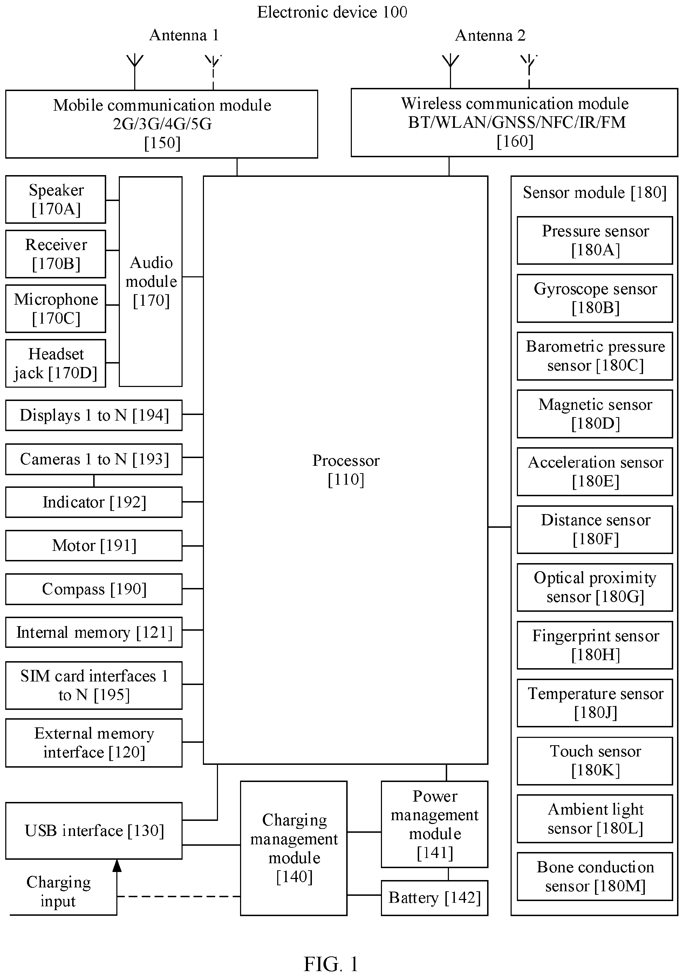

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may alternatively transmit the audio signal to the wireless communication module 160 through the PCM interface, to implement the function of answering the call through the Bluetooth headset. Both the I2S interface and the PCM interface may be configured to perform audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is generally configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit the audio signal to the wireless communication module 160 through the UART interface, to implement a function of playing music through the Bluetooth headset.

An MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device, or may be configured to connect to a headset, to play an audio through the headset. The interface may be further configured to connect to another electronic device like an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger, or may be a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 supplies power to the electronic device by using the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may also be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (not limited to the speaker 170A, the receiver 170B, and the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. Therefore, the electronic device 100 may play or record videos in a plurality of encoding formats, for example, moving picture experts group (moving picture experts group, MPEG)-1, MPEG-2, MPEG-3, and MPEG-4.

An NPU is a neural-network (neural-network, NN) computing processor, quickly processes input information by drawing on a structure of a biological neural network, for example, by drawing on a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to expand a storage capability of the electronic device 100. The external memory card communicates with the processor 110 through the external memory interface 120, to implement a data storage function, for example, store files such as music and a video in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an app required by at least one function (for example, a sound playing function or an image playing function), and the like. The data storage area may store data (such as audio data and an address book) created during use of the electronic device 100, and the like. In addition, the internal memory 121 may include a highspeed random access memory, or may include a nonvolatile memory, for example, at least one magnetic disk storage device, a flash storage device, or a universal flash storage (universal flash storage, UFS).

The electronic device 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed on a same touch location but have different touch operation intensity may correspond to different operation instructions. For example, when a touch operation whose touch operation intensity is less than a first pressure threshold is performed on a messages application icon, an instruction for viewing an SMS message is performed. When a touch operation whose touch operation intensity is greater than or equal to the first pressure threshold is performed on the messages application icon, an instruction for creating a new SMS message is performed.

The gyroscope sensor 180B may be configured to determine a moving posture of the electronic device 100. In some embodiments, angular velocities of the electronic device 100 around three axes (which are x, y, and z axes) may be determined by using the gyroscope sensor 180B. The gyroscope sensor 180B may be configured to implement image stabilization during photographing. For example, when a shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature like automatic unlocking of the flip cover is set based on a detected opening or closing state of the leather case or a detected opening or closing state of the flip cover.

The acceleration sensor 180E may detect magnitudes of accelerations of the electronic device 100 in various directions (generally on three axes). When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photoelectric diode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is lower than another threshold, the electronic device 100 heats the battery 142 to avoid abnormal shutdown of the electronic device 100 caused by a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and a touchscreen, also referred to as a "touch screen", is formed by the touch sensor 180K and the display 194. The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The key 190 includes a power key, a volume key, and the like. The key 190 may be a mechanical key, or may be a touch key. The electronic device 100 may receive a key input, and generate a key signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may be further compatible with an external memory card. The electronic device 100 interacts with a network through the SIM card, to implement functions such as conversation and data communication. In some embodiments, the electronic device 100 uses an embedded SIM (embedded SIM, eSIM) card, that is, an embedded SIM card. The eSIM card may be embedded into the electronic device 100, and cannot be separated from the electronic device 100.

It should be understood that a calling card in embodiments of this application includes but is not limited to a SIM card, an eSIM card, a universal subscriber identity module (universal subscriber identity module, USIM), a universal integrated circuit card (universal integrated circuit card, UICC), and the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

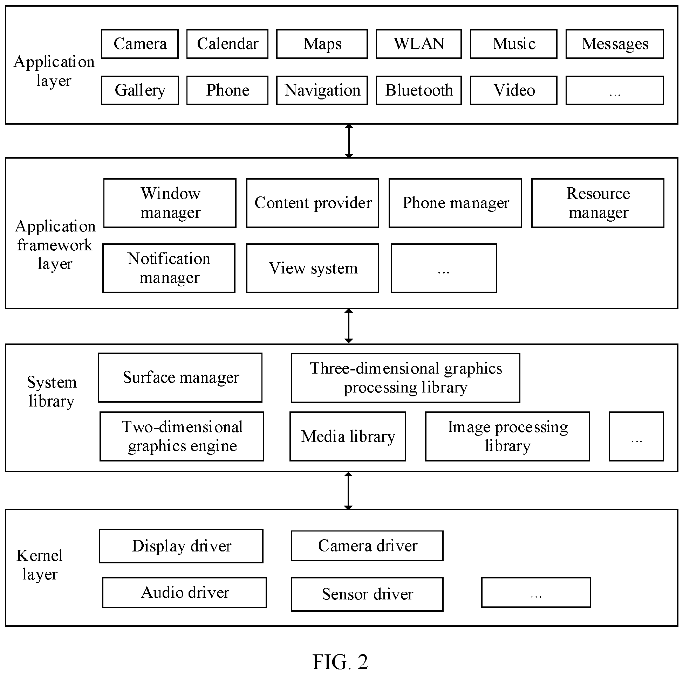

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history, a bookmark, an address book, and the like.

The view system includes visual controls such as a control for displaying a text and a control for displaying an image. The view system may be configured to construct an application. A display interface may include one or more views. For example, a display interface including a notification icon of Messages may include a text display view and an image display view.

The phone manager is configured to provide a communication function for the electronic device 100, for example, management of a call status (including answering, declining, or the like).

The resource manager provides, for the application, various resources like a localized character string, an icon, an image, a layout file, and a video file.

The notification manager enables the application to display notification information in the status bar, and may be configured to convey a notification type message, which may automatically disappear after a short stay without user interaction. For example, the notification manager is configured to notify download completion, give a message notification, and the like. The notification manager may alternatively be a notification that appears in a top status bar of a system in a form of graph or scroll bar text, for example, a notification of an application that is run in the background, or may be a notification that appears on a screen in a form of dialog window. For example, text information is displayed in the status bar, an alert tone is given, the electronic device vibrates, or an indicator light blinks.

The Android runtime includes a core library and a virtual machine. The Android runtime is responsible for scheduling and management of the Android system.

The core library includes two parts: a function that needs to be called in a Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

A user may use a plurality of apps of the electronic device to implement a plurality of functions. For example, the user may implement a locating or navigation function by using a map app on the electronic device, or the user may implement an audio and video listening function by using an audio and video app on the electronic device.

An app may run in a foreground of the electronic device, or may run in a background of the electronic device. When the app runs in the foreground of the electronic device, the electronic device 100 may display a user interface of the app on the display. The user may interact with the app by using a control on the user interface of the app. A case in which the app runs in the electronic device but does not run in the foreground is a case in which the app runs in the background of the electronic device. The case in which the app runs in the background of the electronic device may include that a process of the app exists in the electronic device, but the user interface of the app is not displayed on the display. Because the user interface of the app running in the background is not displayed on the display, the user usually cannot directly interact with the app running in the background. The background may also be referred to as a "non-foreground".

There may be one or more apps running in the foreground of the electronic device, and there may also be one or more apps running in the background of the electronic device. When one or more apps run in the foreground of the electronic device, one or more apps may run in the background of the electronic device.

With development of the electronic device, the user has an increasingly high requirement on the electronic device. For example, after projecting an electronic device A to another electronic device B, a user A can control the projected electronic device A by performing an operation on the electronic device B. However, an operation of another user B on the projected electronic device A cannot be restricted, and user experience is not good for the user A. This application provides a device control method, to restrict an operation of another user on a projected or collaborated electronic device, to meet a control requirement of a main control user (for example, the foregoing user A). This helps improve user experience.

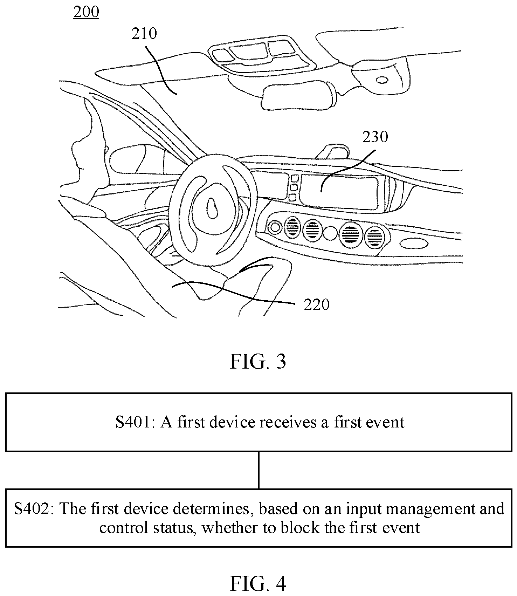

FIG. 3 is a diagram of an application scenario 200 according to an embodiment of this application. For example, as shown in FIG. 3, the application scenario 200 includes a vehicle 210 and a driver 220. The driver 220 is located at a driver seat of the vehicle 210. An in-vehicle device 230 is mounted on the vehicle 210, and the in-vehicle device 230 has a display. It should be understood that the in-vehicle device 230 is used as an example of the electronic device 100 in FIG. 1 and FIG. 2. For a hardware structure and a software structure of the in-vehicle device 230, refer to the foregoing descriptions of the electronic device 100 in FIG. 1 and FIG. 2. Details are not described herein again. Optionally, the vehicle 210 may further include a rear-row tablet computer. Optionally, the tablet computer may be a non-preinstalled device.

A specific form of the in-vehicle device 230 is not limited in embodiments of this application, provided that the in-vehicle device 230 has a display.

Optionally, in some embodiments, the in-vehicle device 230 may be an in-vehicle infotainment product mounted in the vehicle 210.

Optionally, in some embodiments, the in-vehicle device 230 may alternatively be a device connected to an in-vehicle infotainment product mounted in the vehicle 210, for example, a mobile phone.

It should be noted that the scenario shown in FIG. 3 is merely an example, and should not constitute a limitation on this application. For example, the scenario may further include more electronic devices or persons.

The following describes the solutions of this application in detail with reference to the figures.

FIG. 4 shows a device management method according to an embodiment of this application. The method may be applied to the scenario in FIG. 3. For example, a vehicle cockpit may include a first device (for example, a rear-row tablet computer) and a second device (for example, an in-vehicle device). The method may include the following steps.

S401: The first device receives a first event.

The event may be understood as input information received by the first device.

Optionally, an input event (InputEvent) may include a motion event (MotionEvent) and a key event (KeyEvent). For example, the input event may be specifically a sensor input event (Sensor InputEvent), a hook input event (Hook InputEvent), an on input event (On InputEvent), a touchscreen input event (Touch Screen InputEvent, also referred to as a touch event in the following), a key input event (Key InputEvent), a hover input event (Hover InputEvent), or the like.

The touchscreen input event includes the following basic events: A finger presses on a screen (ACTION_DOWN), a finger moves on the screen (ACTION_MOVE), and a finger leaves the screen (ACTION_UP). An event sequence is generated for each time of user interaction. The sequence starts with ACTION_DOWN, includes 0 or n ACTION_MOVE events, and ends with ACTION_UP. The event sequence may usually form a complex event, for example, a tap event, a double-tap event, or a gesture event. The input event in this embodiment of this application may be a basic event, or may be a complex event including basic events. This is not limited in embodiments of this application.

The first event may be a local input event. The local input event may be understood as an event corresponding to an operation of a user on the first device (namely, a local operation on the first device). For example, if the user taps a location on the screen of the first device, "the location is tapped" is a local input event. In other words, for the user, tapping the screen is a user operation (namely, an input operation), and for the first device, an event triggered by "tapping" is an input event. In other words, the event is triggered by an action (or referred to as an operation) of the user. It may also be understood that the first event is the foregoing input event that occurs locally on the first device.

The event in this application further includes a reverse control event, and the reverse control event may be understood as an event triggered when a device is controlled by another device. For example, when the first device is controlled by the second device, for example, through projection control, an event that is on the first device and that is triggered by an operation on the second device is a reverse control event.

S402: The first device determines, based on an input management and control status, whether to block the first event.

The input management and control status represents whether the input operation on the first device is managed and controlled. The input operation of the first device may be understood as the input operation of the user on the first device. In other words, the input management and control status represents whether the input event triggered by the input operation of the user is managed and controlled. For example, the input operation on the first device may be a touch input, a key input, a voice input, a gesture input, or the like. In other words, corresponding to the description of the input event in S401, the operation of the user on the first device may be a key input, a touch input, an air input, or an input operation of a peripheral connected to the first device on the first device, for example, a keyboard input. This is not limited in embodiments of this application.

The following describes this solution by using an example in which a touch input is used as an input operation.

For example, a touch control operation on the first device may be managed and controlled by the second device. The second device may be a device that enables collaboration with the first device, and the second device and the first device enable input management and control. In other words, when the touch control operation on the first device is managed and controlled, the touch control operation on the first device is restricted.

It may be understood that the input management and control status includes enabled or disabled.

In an example, the user may enable input management and control on the second device. The input management and control may be understood as managing the touch operation on the first device end, for example, restricting an operation on the first device end.

In a possible implementation, the user may enable the input management and control by using a physical key of the second device. The physical key may be mounted on the second device, or may be mounted at another location in a cockpit, for example, on a steering wheel.

In another possible implementation, the user may enable the input management and control by using a virtual function key of the second device. For example, the input management and control is enabled by using an input management and control function key in the second device. The input management and control function key may be set on a home page display interface of the second device, or may be set on a control page of the second device, or may be hidden in a menu function. This is not limited in this application.

In another example, the user enables input management and control on the first device. The input management and control may be understood as managing the touch operation on the first device end, for example, restricting an operation on the first device end.

In a possible implementation, the user may enable the input management and control by using a physical key of the first device. The physical key may be mounted on the first device. For example, the physical key may be a volume key of the tablet computer.

In another possible implementation, the user may enable the input management and control by using a virtual function key of the first device. For example, the input management and control is enabled by using an input management and control function key on the screen of the first device. The input management and control function key may be set on a home page of a display interface of the first device, or may be hidden in a menu function, for example, in a drop-down menu. This is not limited in this application.

A manner of enabling the input management and control is not limited in embodiments of this application.

It should be understood that a manner in which the first device enables collaboration with the second device is not limited in embodiments of this application. For example, the collaboration may be enabled in a wired manner, or may be enabled in a wireless manner. After the first device enables collaboration with the second device, the first device and the second device can access each other. For example, the first device may project an interface of the first device to the second device.

For example, the projection may be projecting the interface of the first device to the second device in a wired connection manner.

Alternatively, the interface of the first device may be projected to the second device in a wireless connection manner. For example, the first device may be projected to the second device by using a projection key, for example, a projection key in an app or a projection key in the function menu. Alternatively, the first device may be projected to the second device by using a physical key having a projection function. Optionally, the physical key for projection may be mounted on the first device and/or the second device. In addition, the first device may be projected to the second device by using a projection function virtual key in the function menu. It should be understood that a manner of projecting the first device to the second device is not limited in embodiments of this application.

After the first device projects the interface of the first device to the second device, the first device may be controlled by performing an operation on the second device. After the projection is complete, the input management and control may be enabled.

The blocking the first event may be understood as that an operation corresponding to the first event cannot be performed on the first device. For example, the first device may reject the operation corresponding to the first event, or the first device does not respond to the operation corresponding to the first event. It should be understood that a name of blocking the first event is not limited in embodiments of this application, and all alternative statements that can implement the foregoing effect shall fall within the protection scope of this application.

For example, there may be the following several cases in which the first device determines, based on the input management and control status, whether to block the first event.

S4021: When the input management and control status is enabled, and a location of the operation corresponding to the first event is in a first area, the first device blocks the first event.

S4022: When the input management and control status is enabled, and the location of the operation corresponding to the first event is in a second area, the first device triggers a bypass procedure.

S4023: When the input management and control status is disabled (that is, the input management and control is not enabled), an operation of the user on the first device may not be restricted. In other words, the operation of the user on the first device may be normally implemented. It should be noted that, on the premise that the collaboration is enabled, the user may still control the first device by performing an operation on the second device.

For example, the first area and the second area each may be a part of a screen area of the first device. For example, the first area and the second area do not overlap. Optionally, a sum of the first area and the second area is a screen range of the first device. The foregoing "range" may be a two-dimensional range. For example, the screen of the first device is used as a reference, one side of the screen of the first device is used as a horizontal axis, and another side of the screen of the first device is used as a vertical axis. The second area may be a range in a closed graphic obtained by connecting four points whose coordinates are (x1, y1), (x1, y2), (x2, y1), and (x2, y2), and the first area is a range other than the second area on the screen of the first device. The foregoing uses a rectangle as an example of the second area. It should be understood that a shape and a size of the second area are not limited in embodiments of this application. For example, the shape of the second area may be a circle, a triangle, a square, an ellipse, or an irregular graphic. Because the first area and the second area are adjacent to each other and jointly form the screen range of the first device, a shape and a size of the first area are not limited.

In other words, when determining that the input management and control status is enabled, the first device may further determine, based on the location of the operation corresponding to the first event, whether to block the first event.

When the operation corresponding to the first event falls within the first area, the first device blocks the first event. In other words, a local input event on the first device is restricted.

When the operation corresponding to the first event falls within the second area, the first device triggers the bypass procedure. In other words, the first device releases the input management and control, or the first device adjusts the input management and control status from enabled to disabled.

In a possible manner, the first device may independently complete the bypass procedure. Optionally, when the user taps the second area once, the bypass procedure is triggered. Optionally, when the operation corresponding to the first event falls within the second area, a confirmation interface, for example, an arithmetic question, may be triggered to be displayed, so that the user can confirm to trigger the bypass procedure. The user triggers the bypass procedure after entering or tapping a correct answer. It should be understood that the arithmetic question is merely used as an example of the confirmation interface. This is not limited in embodiments of this application. For example, the confirmation interface may be a picture verification interface or an option determining interface.

In another possible manner, the second device may perform the bypass procedure after the bypass procedure is allowed. For example, the first device may request the second device for leaving the input management and control. After the second device agrees, the first device may release the input management and control.

It should be understood that the foregoing manner is merely an example in which the first device triggers the bypass procedure. This is not limited in embodiments of this application. All manners in which the bypass procedure can be triggered shall fall within the protection scope of this application.

In a possible implementation, when the input management and control status is enabled, the first device may determine, based on whether the first event belongs to an allowlist, processing on the first event. The allowlist is an allowlist of events that can be allowed by the first device.

When the first event belongs to the allowlist, the first device allows the first event. When the first event does not belong to the allowlist, the first device blocks the first event.

Optionally, the allowlist may be predefined. Optionally, the allowlist may alternatively be indicated. For example, the second device sends information to the first device, and the information indicates the allowlist. A manner of determining the allowlist is not limited in this application.

Optionally, the input management and control status may be represented by a flag bit. For example, the first device may set a flag bit, and the flag bit represents the input management and control status. To be specific, the flag bit represents that the input management and control status is enabled or disabled, or the flag bit represents whether the input management and control is enabled. Specifically, the flag bit may be set to true or false. When the flag bit is true, it represents that the input management and control status is enabled or the input management and control is enabled. When the flag bit is false, it represents that the input management and control status is disabled or the input management and control is not enabled. It should be understood that the setting of the flag bit is merely an example rather than a limitation. For example, the flag bit may alternatively be set to 0 or 1. When the flag bit is 1, it represents that the input management and control status is enabled or the input management and control is enabled. When the flag bit is 0, it represents that the input management and control status is disabled or the input management and control is not enabled. It should be further understood that a correspondence between a specific value of the flag bit and a meaning represented by the value is not limited in embodiments of this application. It should be further understood that the correspondence between the specific value of the flag bit and the meaning represented by the value may be predefined, or may be configured. This is not limited in embodiments of this application.

In the method, after the first device and the second device enable the collaboration and enable the input management and control, the first device further determines, by determining the location of the operation of the local event on the first device, whether to restrict the operation or release the input management and control, so that a local operation of another user on the first device can be restricted. This improves user experience in a scenario in which the first device collaborates with the second device.

The foregoing describes the method for restricting the local operation on the first device, and the following describes implementations of the method in detail with reference to several possible scenarios.

In a possible implementation, the foregoing method is applicable to an in-vehicle device and a tablet.

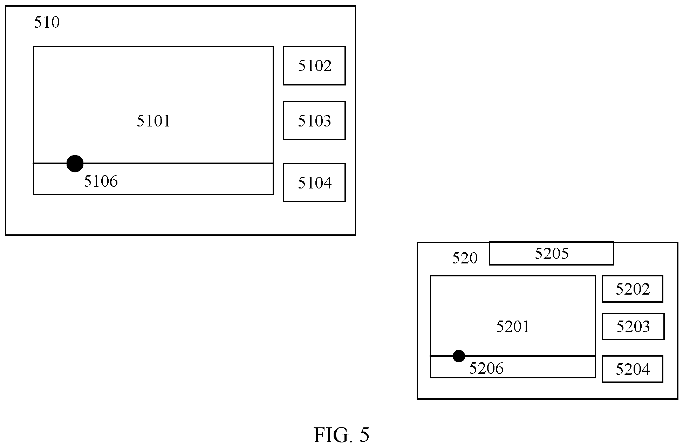

FIG. 5 is a group of graphical user interfaces (graphical user interfaces, GUIs) according to an embodiment of this application. An in-vehicle display 510 and a tablet screen 520 are included.

In a possible manner, touch control is performed on the tablet screen 520 by using the in-vehicle display 510 (also referred to as an in-vehicle screen in this specification). In other words, the in-vehicle display 510 is an example of the second device in FIG. 4, and the tablet screen 520 is an example of the first device in FIG. 4.

It may be understood that, after enabling collaboration, the in-vehicle display 510 and the tablet screen 520 enable input management and control. Specifically, for a manner in which the in-vehicle display 510 and the tablet screen 520 enable the collaboration and enable the input management and control, refer to the description in S402. Details are not described herein again.

After the collaboration is enabled, the tablet screen 520 may be controlled by using the in-vehicle display 510. For example, a video A is being played on the tablet screen 520, and a picture of the video A is 5201 in the figure. The picture 5201 may be projected to the in-vehicle display 510, for example, a picture 5101 on the in-vehicle display 510. Content displayed in the picture 5101 is completely the same as that displayed in the picture 5201. The picture includes a video progress bar 5106. A user may control, by dragging the video progress bar 5106 on the in-vehicle display 510, progress of the video A played on the tablet screen 520. In other words, the user may implement projection reverse control on the tablet screen 520 through the in-vehicle display 510.

It should be understood that, after projection, content of projection pictures on the two electronic devices is completely the same, but content on displays of the two electronic devices is not necessarily the same. For example, the picture 5201 is projected to the in-vehicle display 510, and the picture 5101 on the in-vehicle display 510 is the same as the picture 5201 on the tablet, but the in-vehicle display 510 may have display content different from that on the tablet screen 520.

After the input management and control is enabled, an operation corresponding to a local event on the tablet screen 520 is restricted.

For example, a cover legend (5202) of a video B, a cover legend (5203) of a video C, and a cover legend (5204) of a video D are sequentially arranged on a right side of the tablet screen 520, and may be used by the user to select or switch a video.

The tablet screen 520 may further include a bypass area 5205, and the bypass area is an example of the first area in S402. All parts of the tablet screen 520 except the bypass area 5205 belong to a restricted area (also referred to as a non-bypass area), namely, an example of the second area in S402.

In an example, when the user taps the cover legend (5202) of the video B on the tablet screen 520, and intends to switch the currently played video A to the video B, the tablet determines a location of the operation of the user, namely, a tapping location, to determine subsequent processing. For example, if the tablet determines that the tapping location belongs to the non-bypass area, the tablet blocks the "video switching event". In other words, the video switching operation of the user on the tablet screen 520 is restricted.

In another example, when an operation of the user on the tablet screen 520 falls within a bypass area range, for example, the tapping location of the user is M, and the tablet determines that the location M belongs to the bypass area, the tablet starts a bypass procedure, and releases the input management and control. After the input management and control is released, the user can freely perform an operation on the tablet screen 520.

The foregoing solution brings more application scenarios for projection reverse control. For example, in a cockpit scenario, when a child uses a tablet computer in a rear row to watch a video, a picture on the tablet computer may be projected to a display in a front row of the cockpit, and a parent in the front row may operate, through projection reverse control, the tablet computer to select content watched by the child, and restrict a local operation of the child on the tablet computer, to prevent the child from accidentally touching the tablet computer. In addition, after a user of the tablet computer switches to an adult, self-service bypass can be performed, and the input management and control can be released.

Specifically, the following provides a detailed interaction procedure.

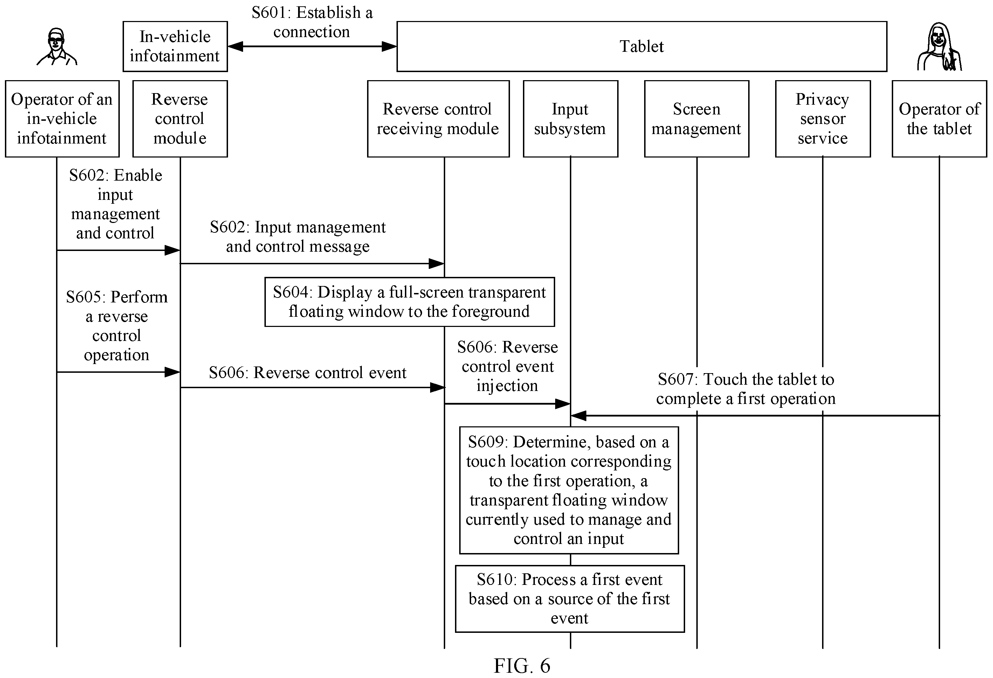

FIG. 6 is a flowchart of interaction between an in-vehicle infotainment and a tablet according to an embodiment of this application.

Optionally, the in-vehicle infotainment may include a reverse control module, and the reverse control module may also be configured to receive projection. The tablet may include a reverse control receiving module, an input subsystem, a screen management module, and a privacy sensor service module.

Specifically, the following steps may be included.

S601: The in-vehicle infotainment establishes a connection to the tablet.

For example, the in-vehicle infotainment may enable collaboration with the tablet. For example, the tablet projects an interface of the tablet to a display of the in-vehicle infotainment. Specifically, for a manner of enabling the collaboration, refer to the description in S402. Details are not described again.

S602: An operator of the in-vehicle infotainment enables input management and control.

It should be understood that enabling the input management and control by the operator of the in-vehicle infotainment herein is merely an example of a manner of enabling the input management and control, and this is not limited. Specifically, for the manner of enabling the input management and control, refer to the description in S402. Details are not described again.

S603: The reverse control module of the in-vehicle infotainment sends an input management and control message to the reverse control receiving module of the tablet, and correspondingly, the reverse control receiving module of the tablet receives the input management and control message.

S604: The reverse control receiving module of the tablet displays a full-screen transparent floating window to the foreground.

The full-screen transparent floating window includes a bypass area.

S605: The user of the in-vehicle infotainment performs a reverse control operation.

For example, the user of the in-vehicle infotainment may perform an operation on the display of the in-vehicle device, to control the tablet. The reverse control operation may be understood as an example of an input operation. Specifically, for the reverse control operation, refer to the description of the input operation in S402. In other words, the reverse control operation may be understood as a non-local operation of the tablet. For example, the reverse control operation may be controlling display of the tablet by using the display of the in-vehicle device. For example, the user of the in-vehicle infotainment drags a progress bar of a video on the display of the in-vehicle device, to control progress of the video on the tablet screen.

S606: The reverse control module of the in-vehicle infotainment sends a reverse control event to the reverse control receiving module of the tablet, and correspondingly, the reverse control receiving module of the tablet receives the reverse control event.

The reverse control event is an event corresponding to the reverse control operation. In other words, the reverse control event is an event triggered by the reverse control operation. The reverse control event may be understood as an example of an input event. For details, refer to the description of the input event in S401.

S607: The reverse control receiving module of the tablet sends the reverse control event to the input subsystem, and correspondingly, the input subsystem receives the reverse control event.

S608: The tablet receives a first operation of an operator of the tablet.

It should be understood that the operator of the tablet may tap any location on the tablet screen. For example, the operator of the tablet may tap an app.

S609: The input subsystem of the tablet determines, based on a touch location corresponding to the first operation, a transparent floating window currently used to manage and control an input.

It should be understood that the transparent floating window may be displayed on the tablet screen.

In other words, the input subsystem of the tablet further determines, based on the touch location of the first operation, whether the transparent floating window exists. Generally, when the input management and control status is enabled, the transparent floating window is displayed on the tablet screen.

Optionally, before the input subsystem of the tablet determines the transparent floating window, the input management and control status of the tablet screen may be further determined based on a flag bit. For details, refer to the description of the flag bit in S402. Details are not described herein again.

S610: The input subsystem of the tablet processes the first event based on a source of the first event.

The first event is an event corresponding to the first operation in S608. In other words, the first event is an event triggered by the first operation. The first event is an example of the input event in S401. For details, refer to related description in S401. Details are not described herein again.

Optionally, if the input event is a reverse control event, that is, the input event is from the in-vehicle infotainment, the input subsystem does not perform processing, and continues to distribute the input event in the system.

Optionally, if the input event is a local event, that is, the input event is from the tablet, the input subsystem redirects the first event back to the floating window, and blocks an event transfer procedure outside the bypass area.

Redirecting back to the floating window may be understood as follows: Before the input management and control is enabled, a distribution path of the local input event is determined, and the distribution path is modified after the input management and control is enabled. Redirection is to distribute the input event to the floating window. It should be understood that, for explanation of redirection in the following, refer to the description herein. Details are not described again.

In this procedure, the tablet may determine, based on a location of a user operation, a processing manner of an event corresponding to the operation, so that an operation of a user of the tablet can be restricted on a premise that the in-vehicle infotainment collaborates with the tablet and the input management and control is enabled, and a way for the user of the tablet to release the input management and control is reserved. This effectively improves user experience.

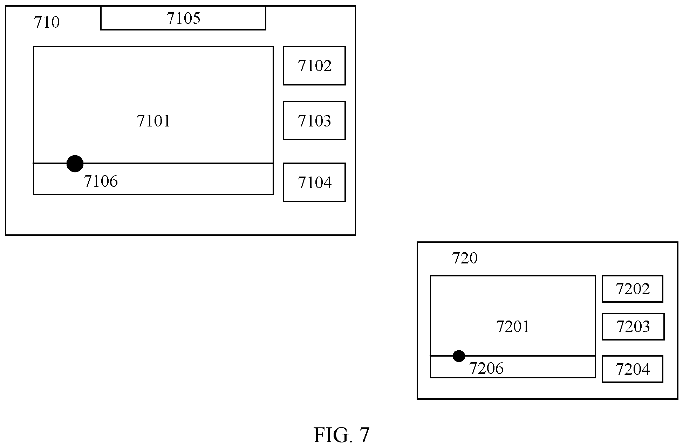

FIG. 7 is another group of graphical user interfaces (graphical user interface, GUI) according to an embodiment of this application. An in-vehicle display 710 and a tablet screen 720 are included.

In another possible manner, touch control is performed on the in-vehicle display 710 by using the tablet screen 720. In other words, the in-vehicle display 710 is an example of the first device in FIG. 4, and the tablet screen 720 is an example of the second device in FIG. 4.

It may be understood that, after enabling collaboration, the in-vehicle display 710 and the tablet screen 720 enable input management and control. Specifically, for a manner in which the in-vehicle display 710 and the tablet screen 720 enable the collaboration and enable the input management and control, refer to the description in S402. Details are not described herein again.

After the collaboration is enabled, the in-vehicle display 710 may be controlled by using the tablet screen 720. For example, a video A is being played on the in-vehicle display 710, and a picture of the video A is 7101 in the figure. The picture 7101 may be projected to the tablet screen 720, for example, a picture 7201 on the tablet screen 720. Content displayed in the picture 7201 is completely the same as that displayed in the picture 7101. The picture includes a video progress bar 7206. A user may control, by dragging the video progress bar 7206 on the tablet screen 720, progress of the video A played on the in-vehicle display 710. In other words, the user may implement projection reverse control on the in-vehicle display 710 on the tablet.

After the input management and control is enabled, an operation corresponding to a local event on the in-vehicle display 710 is restricted.

For example, a cover legend (7102) of a video B, a cover legend (7103) of a video C, and a cover legend (7104) of a video D are sequentially arranged on a right side of the in-vehicle display 710, and may be used by the user to select or switch a video.

The in-vehicle display 710 may further include a bypass area 7105, and the bypass area is an example of the first area in S402. All parts of the in-vehicle display 710 except the bypass area 7105 belong to a restricted area (also referred to as a non-bypass area), namely, an example of the second area in S402.

In an example, when the user taps the cover legend (7202) of the video B on the in-vehicle display 720, and intends to switch the currently played video A to the video B, the in-vehicle infotainment determines a location of an operation of the user, namely, a tapping location, to determine subsequent processing. For example, if the in-vehicle infotainment determines that the tapping location belongs to the non-bypass area, the in-vehicle infotainment blocks the "video switching event". In other words, a video switching operation of the user on the in-vehicle display 720 is restricted.

In another example, when an operation of the user on the in-vehicle display 720 falls within a bypass area range, and the tablet determines that the location belongs to the bypass area, the in-vehicle infotainment starts a bypass procedure, and releases the input management and control. After the input management and control is released, the user can freely perform an operation on the in-vehicle display 720.

Specifically, the following provides a detailed interaction procedure.

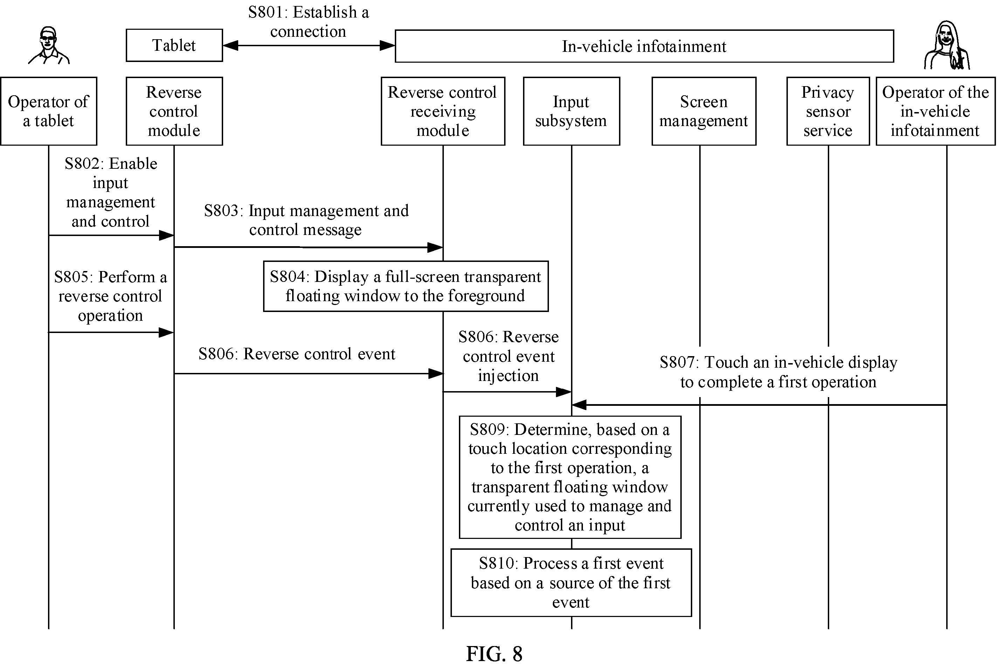

FIG. 8 is a flowchart of interaction between an in-vehicle infotainment and a tablet according to an embodiment of this application.

Optionally, the tablet may include a reverse control module, and the reverse control module may also be configured to receive projection. The in-vehicle infotainment may include a reverse control receiving module, an input subsystem, a screen management module, and a privacy sensor service module.

Specifically, the following steps may be included.

S801: The in-vehicle infotainment establishes a connection to the tablet.

For example, the in-vehicle infotainment may enable collaboration with the tablet. For example, the tablet projects an interface of the tablet to a display of the in-vehicle infotainment. Specifically, for a manner of enabling the collaboration, refer to the description in S402. Details are not described again.

S802: An operator of the tablet enables input management and control.

It should be understood that enabling the input management and control by the operator of the tablet herein is merely an example of a manner of enabling the input management and control, and is not limited. Specifically, for the manner of enabling the input management and control, refer to the description in S402. Details are not described again.

S803: The reverse control module of the tablet sends an input management and control message to the reverse control receiving module of the in-vehicle infotainment, and correspondingly, the reverse control receiving module of the in-vehicle infotainment receives the input management and control message.

S804: The reverse control receiving module of the in-vehicle infotainment displays a full-screen transparent floating window to the foreground.

The full-screen transparent floating window includes a bypass area.

S805: The user of the tablet performs a reverse control operation.

For example, the user of the tablet may perform an operation to control an in-vehicle display. The reverse control operation may be understood as an example of an input operation. Specifically, for the reverse control operation, refer to the description of the input operation in S402. In other words, the reverse control operation may be understood as a non-local operation. For example, the reverse control operation may be controlling a display of the in-vehicle device by using the tablet. For example, the user of the tablet drags a progress bar of a video on a tablet screen, to control progress of a video on the display of the in-vehicle device.

S806: The reverse control module of the tablet sends a reverse control event to the reverse control receiving module of the in-vehicle infotainment, and correspondingly, the reverse control receiving module of the in-vehicle infotainment receives the reverse control event.

The reverse control event is an event corresponding to the reverse control operation. In other words, the reverse control event is an event triggered by the reverse control operation. The reverse control event may be understood as an example of an input event. For details, refer to the description of the input event in S401.

S807: The reverse control receiving module of the in-vehicle infotainment sends the reverse control event to the input subsystem, and correspondingly, the input subsystem receives the reverse control event.

S808: An operator of the in-vehicle infotainment touches the in-vehicle display to complete the first operation.

It should be understood that the operator of the in-vehicle infotainment may tap any location on the in-vehicle display. For example, the operator of the in-vehicle infotainment may tap an app.

S809: The input subsystem of the in-vehicle infotainment determines, based on a touch location corresponding to the first operation, a transparent floating window currently used to manage and control an input.

Optionally, before the input subsystem of the in-vehicle infotainment determines the transparent floating window, the input management and control status of an in-vehicle infotainment screen may be further determined based on a flag bit. For details, refer to the description of the flag bit in S402. Details are not described herein again.

S810: The input subsystem of the in-vehicle infotainment processes the first event based on a source of the first event.

The first event is an event corresponding to the first operation in S808. In other words, the first event is an event triggered by the first operation. The first event is an example of the input event in S401. For details, refer to related description in S401. Details are not described herein again.

Optionally, if the first event is a reverse control event, that is, the first event is from the tablet, the input subsystem does not perform processing, and continues to distribute the first event in a system.

Optionally, if the first event is a local event, that is, the first event is from the in-vehicle infotainment, the input subsystem redirects the first event back to the floating window, and blocks an event transfer procedure outside the bypass area.

In this procedure, the in-vehicle infotainment may determine, based on a location of a user operation, a processing manner of an event corresponding to the operation, so that an operation of the user of the in-vehicle infotainment can be restricted on a premise that the tablet collaborates with the in-vehicle infotainment and the input management and control is enabled, and a way for the user of the in-vehicle infotainment to release the input management and control is reserved. This effectively improves user experience.

In still another possible manner, in the foregoing system in which the first device communicates with the second device, a third device may further exist. For example, the third device may be a mobile phone. It should be understood that the following uses a mobile phone as an example to describe the solution. However, a type of the third device in this application is not limited thereto. For example, the third device may alternatively be a tablet or a portable computer.

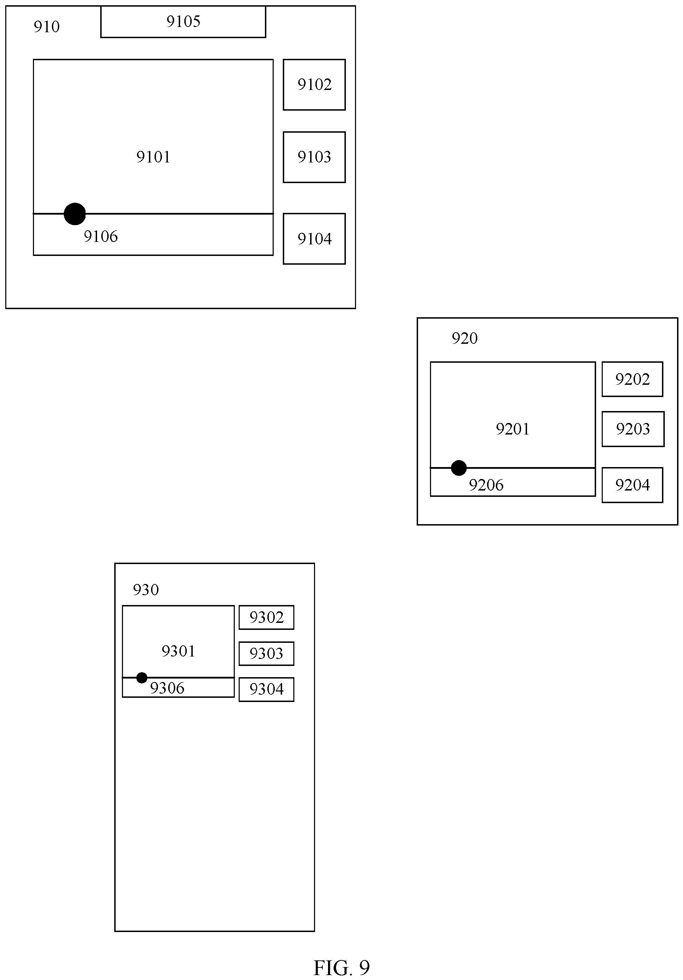

FIG. 9 is another group of graphical user interfaces (graphical user interface, GUI) according to an embodiment of this application. An in-vehicle display 910, a tablet screen 920, and a mobile phone screen 930 are included.

The mobile phone may share an interface of the mobile phone with the in-vehicle infotainment, and the in-vehicle infotainment then projects an interface of the in-vehicle infotainment to the tablet, to implement input management and control on the in-vehicle display by using the tablet. For example, touch control is performed on the in-vehicle display 910 by using the tablet screen 920. In other words, the in-vehicle display 910 is an example of the first device in FIG. 4, and the tablet screen 920 is an example of the second device in FIG. 4.

It should be understood that in the solution shown in FIG. 9, an example in which the mobile phone performs sharing, and the in-vehicle infotainment is projected to the tablet is used for description. However, this application is not limited thereto. For example, the mobile phone may also share the interface of the mobile phone with the tablet, and then the tablet projects the interface of the mobile phone to the in-vehicle infotainment, to implement input management and control on the tablet by using the in-vehicle infotainment. Details are not described again.

It may be understood that, after enabling collaboration, the in-vehicle display 910 and the tablet screen 920 enable input management and control. Specifically, for a manner in which the in-vehicle display 910 and the tablet screen 920 enable the collaboration and enable the input management and control, refer to the description in S402. Details are not described herein again. Interface sharing between the mobile phone and the in-vehicle infotainment may alternatively be implemented by enabling the collaboration. Specifically, the description of the manner of enabling the collaboration in S402 is also applicable to the collaboration between the mobile phone and the in-vehicle infotainment. Details are not described again.

After the collaboration is enabled, the tablet screen 920 may be controlled by using the in-vehicle display 910. For example, a video A is being played on the in-vehicle display 910, and a picture of the video A is 9101 in the figure. The picture 9101 may be projected to the tablet screen 920, for example, a picture 9201 on the tablet screen 920. Content displayed in the picture 9201 is completely the same as that displayed on the picture 9101 and that displayed on a picture 9301. The picture includes a video progress bar 9206. A user may control, by dragging the video progress bar 9206 on the tablet screen 920, progress of the video A played on the in-vehicle display 910. In other words, the user may implement projection reverse control on the in-vehicle display 910 on the tablet.

After the input management and control is enabled, an operation corresponding to a local event on the in-vehicle display 910 is restricted.

For example, a cover legend (9102) of a video B, a cover legend (9103) of a video C, and a cover legend (9104) of a video D are sequentially arranged on a right side of the in-vehicle display 910, and may be used by the user to select or switch a video.

The in-vehicle display 910 may further include a bypass area 9105, and the bypass area is an example of the first area in S402. All parts of the in-vehicle display 910 except the bypass area 9107 belong to a restricted area (also referred to as a non-bypass area), namely, an example of the second area in S402.

In an example, when the user taps the cover legend (9202) of the video B on the in-vehicle display 910, and intends to switch the currently played video A to the video B, the in-vehicle infotainment determines a location of an operation of the user, namely, a tapping location, to determine subsequent processing. For example, if the in-vehicle infotainment determines that the tapping location belongs to the non-bypass area, the in-vehicle infotainment blocks the "video switching event". In other words, a video switching operation of the user on the in-vehicle display 920 is restricted.

In another example, when an operation of the user on the in-vehicle display 910 falls within a bypass area range, for example, the tapping location of the user is O, and the tablet determines that the location O belongs to the bypass area, the in-vehicle infotainment starts a bypass procedure, and releases the input management and control restriction. After the input management and control restriction is released, the user can freely perform an operation on the in-vehicle display 910.

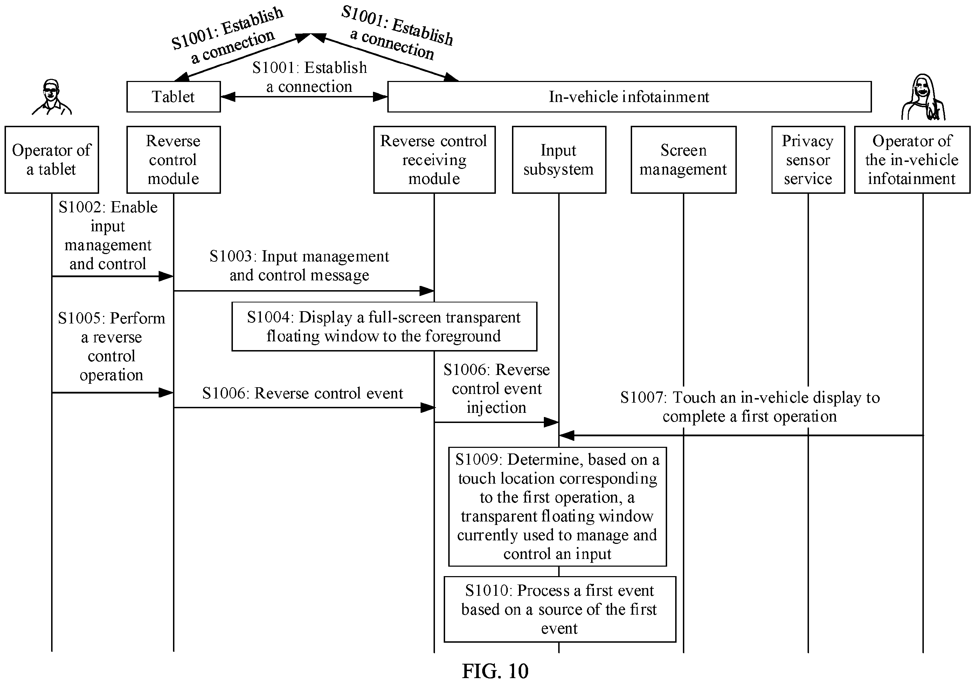

FIG. 10 is a flowchart of interaction between an in-vehicle infotainment, a mobile phone, and a tablet according to an embodiment of this application.

Optionally, the tablet may include a reverse control module, and the reverse control module may also be configured to receive projection. The in-vehicle infotainment may include a reverse control receiving module, an input subsystem, a screen management module, and a privacy sensor service module.

Specifically, the following steps may be included.

S1001: The in-vehicle infotainment, the mobile phone, and the tablet establish a connection.

For example, the in-vehicle infotainment may enable collaboration with the mobile phone and the tablet. For example, the mobile phone projects an interface of the mobile phone to a display of the in-vehicle infotainment. Alternatively, the mobile phone projects the interface of the mobile phone to the tablet. Specifically, for a manner of enabling the collaboration, refer to the description in S402. Details are not described again. It should be understood that after the mobile phone projects the interface of the mobile phone to the tablet, the tablet may project the projection interface to an in-vehicle screen. A manner of screen sharing between three devices is not limited in embodiments of this application, and all manners that can implement screen sharing between the three devices should fall within the protection scope of this application.

S1002: An operator of the tablet enables input management and control.

It should be understood that enabling the input management and control by the operator of the tablet herein is merely an example of a manner of enabling the input management and control, and is not limited. Specifically, for the manner of enabling the input management and control, refer to the description in S402. Details are not described again.

S1003: The reverse control module of the tablet sends an input management and control message to the reverse control receiving module of the in-vehicle infotainment, and correspondingly, the reverse control receiving module of the in-vehicle infotainment receives the input management and control message.

S1004: The reverse control receiving module of the in-vehicle infotainment displays a full-screen transparent floating window to the foreground.

The full-screen transparent floating window includes a bypass area.

S1005: The user of the tablet performs a reverse control operation.

For example, the user of the tablet may perform an operation to control an in-vehicle display. Specifically, refer to the description in S805. Details are not described again.

S1006: The reverse control module of the tablet sends a reverse control event to the reverse control receiving module of the in-vehicle infotainment, and correspondingly, the reverse control receiving module of the in-vehicle infotainment receives the reverse control event.

The reverse control event is an event corresponding to the reverse control operation. Specifically, refer to the description in S806. Details are not described again.

S1007: The reverse control receiving module of the in-vehicle infotainment sends the reverse control event to the input subsystem, and correspondingly, the input subsystem receives the reverse control event.

S1008: An operator of the in-vehicle infotainment touches the in-vehicle display to complete the first operation.

It should be understood that the operator of the in-vehicle infotainment may tap any location on the in-vehicle display. For example, the operator of the in-vehicle infotainment may tap an app.

S1009: The input subsystem of the in-vehicle infotainment determines, based on a touch location corresponding to the first operation, a transparent floating window currently used to manage and control an input.

Optionally, before the input subsystem of the in-vehicle infotainment determines the transparent floating window, the input management and control status of an in-vehicle infotainment screen may be further determined based on a flag bit. For details, refer to the description of the flag bit in S402. Details are not described herein again.

S1010: The input subsystem of the in-vehicle infotainment processes the first event based on a source of the first event.

The first event is an event corresponding to the first operation in S10010. In other words, the first event is an event triggered by the first operation. The first event is an example of the input event in S401. For details, refer to related description in S401. Details are not described herein again.

Optionally, if the first event is a reverse control event, that is, the first event is from the tablet, the input subsystem does not perform processing, and continues to distribute the first event in a system.

Optionally, if the first event is a local event, that is, the first event is from the in-vehicle infotainment, the input subsystem redirects the first event back to the floating window, and blocks an event transfer procedure outside the bypass area.

It should be understood that the foregoing manner is described by using an example in which the mobile phone performs projection and the tablet manages a touch operation on the in-vehicle infotainment. This is not limited in this application. For example, the in-vehicle infotainment may also manage a touch operation on the tablet. Alternatively, the in-vehicle infotainment may manage a touch operation on the mobile phone. Alternatively, the mobile phone manages a touch operation on the tablet. Alternatively, the mobile phone manages a touch operation on the in-vehicle display, and the like, which are not listed one by one herein.

In this manner, in a case of multi-device sharing, input management and control of a device is enabled, and the device may process an event based on a source of the event. This effectively restricts a local operation on the managed and controlled device, and improves user experience.

It should be further understood that, in this manner, only interaction between three devices is used as an example. A quantity of devices included in the communication system is not limited in this application. For example, interaction between four devices or interaction between five devices may be alternatively used.

The first device and the second device in the foregoing solution may belong to different devices, for example, an in-vehicle infotainment and a tablet, for another example, different devices in an in-vehicle infotainment with a multi-core multi-screen mechanism. Alternatively, the first device and the second device may belong to a same device. For example, the first device and the second device may be different electronic screens mounted on an in-vehicle infotainment with a one-core multi-screen mechanism. It should be understood that a quantity of devices included in the communication system is not limited in this application. For example, the communication system in this application may include a plurality of electronic screens mounted on an in-vehicle infotainment. To clearly describe the solutions of this application, the following uses an example in which a communication system includes two electronic screens for description. To be specific, the first device is an in-vehicle screen 1, and the second device is an in-vehicle screen 2.

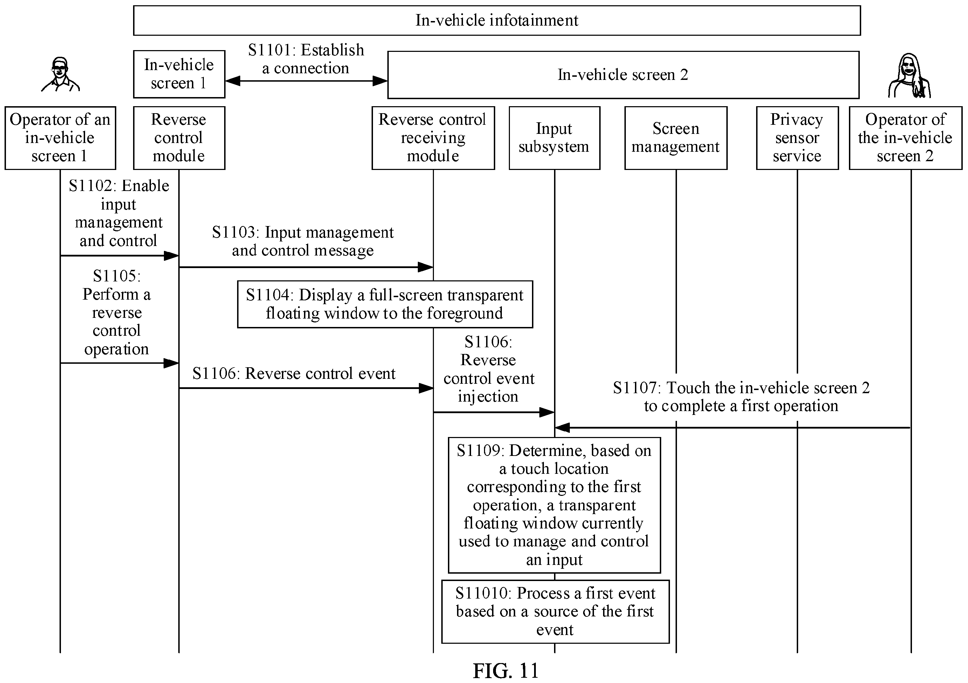

FIG. 11 is a flowchart of interaction between different in-vehicle screens according to an embodiment of this application.

Optionally, an in-vehicle screen 1 may include a reverse control module, and the reverse control module may also be configured to receive projection. An in-vehicle screen 2 may include a reverse control receiving module, an input subsystem, a screen management module, and a privacy sensor service module. In other words, herein, the in-vehicle screen 1 is used as an example of the second device, and the in-vehicle screen 2 is used as an example of the first device.

Specifically, the following steps may be included.

S1101: The in-vehicle screen 1 establishes a connection to the in-vehicle screen 2.

For example, the in-vehicle screen 1 may enable collaboration with the in-vehicle screen 2. For example, an interface of the in-vehicle screen 2 is projected to the in-vehicle screen 1. Specifically, for a manner of enabling the collaboration, refer to the description in S402. Details are not described again.

S1102: An operator of an in-vehicle screen 1 enables input management and control.

It should be understood that enabling the input management and control by the operator of the in-vehicle screen 2 herein is merely an example of a manner of enabling the input management and control, and is not limited. Specifically, for the manner of enabling the input management and control, refer to the description in S402. Details are not described again.

S1103: The reverse control module of the in-vehicle screen 1 sends an input management and control message to the reverse control receiving module of the in-vehicle screen 2, and correspondingly, the reverse control receiving module of the in-vehicle screen 2 receives the input management and control message.

S1104: The reverse control receiving module of the in-vehicle screen 2 displays a full-screen transparent floating window to the foreground.

The full-screen transparent floating window includes a bypass area.

S1105: The user of the in-vehicle screen 1 performs a reverse control operation.

For example, the user of the in-vehicle screen 1 may perform an operation to control the in-vehicle screen 2.

This operation is a reverse control operation. The reverse control operation may be understood as an example of an input operation. Specifically, for the reverse control operation, refer to the description of the input operation in S402. In other words, the reverse control operation may be understood as a non-local operation. For example, the reverse control operation may be controlling a display of the in-vehicle screen 2 by using the in-vehicle screen 1. For example, the user of the in-vehicle screen 1 drags a progress bar of a video on the in-vehicle screen 1, to control progress of a video on the in-vehicle screen 2.

S1106: The reverse control module of the in-vehicle screen 1 sends a reverse control event to the reverse control receiving module of the in-vehicle screen 2, and correspondingly, the reverse control receiving module of the in-vehicle screen 2 receives the reverse control event.

The reverse control event is an event corresponding to the reverse control operation. In other words, the reverse control event is an event triggered by the reverse control operation. The reverse control event may be understood as an example of an input event. For details, refer to the description of the input event in S401.

S1107: The reverse control receiving module of the in-vehicle screen 2 sends the reverse control event to the input subsystem, and correspondingly, the input subsystem receives the reverse control event.

S1108: An operator of the in-vehicle screen 2 touches the in-vehicle screen 2 to complete the first operation.

It should be understood that the operator of the in-vehicle screen 2 may tap any location on the in-vehicle display. For example, the operator of the in-vehicle screen 2 may tap an app.

S1109: The input subsystem of the in-vehicle screen 2 determines, based on a touch location corresponding to the first operation, a transparent floating window currently used to manage and control an input.

Optionally, before the input subsystem of the in-vehicle screen 2 determines the transparent floating window, an input management and control status of the in-vehicle screen 2 may be further determined based on a flag bit. For details, refer to the description of the flag bit in S402. Details are not described herein again.

S1111: The input subsystem of the in-vehicle screen 2 processes the first event based on a source of the first event.

The first event is an event corresponding to the first operation in S1108. In other words, the first event is an event triggered by the first operation. The first event is an example of the input event in S401. For details, refer to related description in S401. Details are not described herein again.

Optionally, if the first event is a reverse control event, that is, the first event is from the in-vehicle screen 2, the input subsystem does not perform processing, and continues to distribute the first event in a system.

Optionally, if the first event is a local event, that is, the first event is from the in-vehicle screen 1, the input subsystem redirects the first event back to the floating window, and blocks an event transfer procedure outside the bypass area.

In this manner, input management and control may also be implemented between different displays belonging to a same device. When one of the displays is managed and controlled, processing on the event may be determined based on a source of the local event, for example, blocking the event. This effectively avoids impact of the local operation on a current running task on the screen, and improves user experience.

In consideration of a privacy protection problem of a managed and controlled device in a multi-device collaboration scenario, this application further provides an embodiment. This embodiment provides a privacy protection method, to protect user privacy.

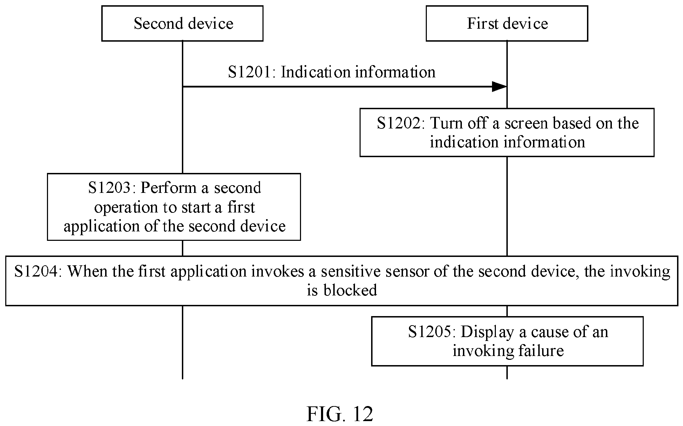

FIG. 12 shows a device management method according to an embodiment of this application. The method may include the following steps.

S1201: A second device sends indication information to a first device, and correspondingly, the first device receives the indication information.

The first device enables collaboration with the second device. For example, the first device projects an interface of the first device to the second device, and the second device may control the first device by performing a local operation on the second device. Specifically, for a manner in which the first device enables the collaboration with the second device, refer to the description in S402. Details are not described again.

The indication information indicates the second device to turn off a screen.

S1202: The first device turns off the screen based on the indication information.

S1203: The second device performs a second operation to start a first application of the first device.

In other words, when the first device turns off the screen, the second device can still control the first device by performing a local operation. For example, the second device starts the first application by using the second operation.

S1204: When the first application invokes a sensitive sensor of the first device, the invoking is blocked.

The sensitive sensor may be a sensor like a camera or a microphone. That the invoking is blocked may be understood as that the invoking fails or is rejected.

Optionally, the method may further include the following step.

S1205: The first device displays a cause of the invoking failure.

In other words, the first device may remind the operator of the cause of the invoking failure. The user can adjust the operation based on the reminding.

Optionally, the cause of the invoking failure may alternatively be displayed on the second device. This is not limited in this application.

In the method, after the second device collaborates with the first device and the screen is turned off, the invoking of the sensitive sensor may be blocked, to protect user privacy and improve user experience.

Specifically, the following provides a specific implementation procedure of the foregoing method by using an example in which the second device is an in-vehicle infotainment and the first device is a tablet.

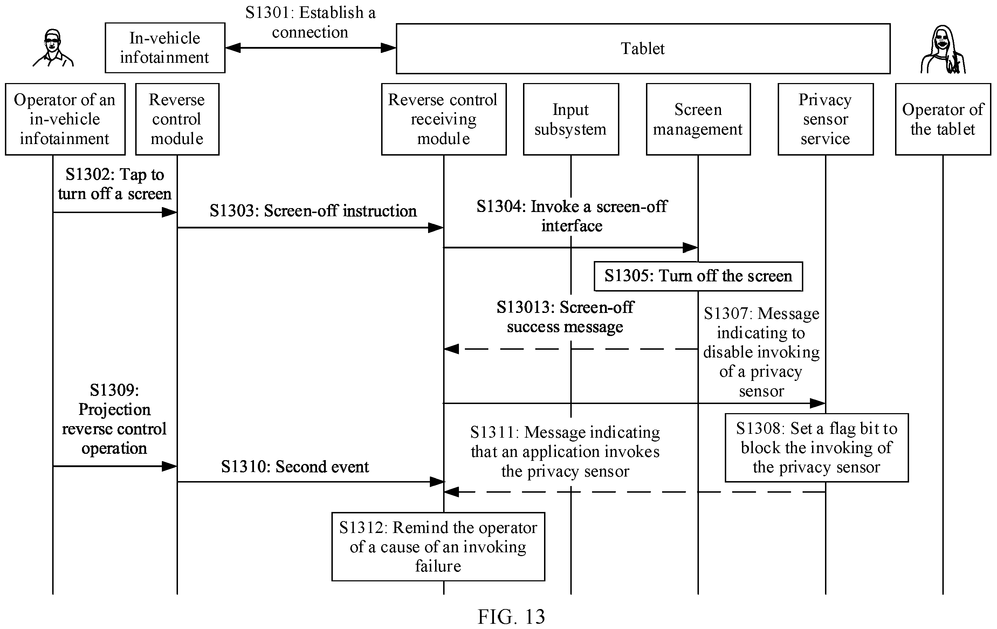

FIG. 13 is a flowchart of interaction between an in-vehicle infotainment and a tablet according to an embodiment of this application.

Optionally, the in-vehicle infotainment may include a reverse control module, and the reverse control module may also be configured to receive projection. The tablet may include a reverse control receiving module, an input subsystem, a screen management module, and a privacy sensor service module.

S1301: The in-vehicle infotainment establishes a connection to the tablet.

For example, the in-vehicle infotainment may enable collaboration with the tablet. For example, the tablet projects an interface of the tablet to a display of the in-vehicle infotainment. Specifically, for a manner of enabling the collaboration, refer to the description in S402. Details are not described again.

S1302: A user of the in-vehicle infotainment taps to turn off a screen.

S1303: The reverse control module of the in-vehicle infotainment sends a screen-off instruction to the reverse control receiving module of the tablet, and correspondingly, the reverse control receiving module of the tablet receives the screen-off instruction.

S1304: The reverse control receiving module of the tablet invokes a screen-off interface from the screen management module.

S1305: The screen management module of the tablet performs screen-off.

Optionally, S1306: The screen management module of the tablet sends a screen-off success message to the reverse control receiving module of the tablet, and correspondingly, the reverse control receiving module of the tablet receives the screen-off success message.

S1307: The reverse control receiving module of the tablet sends a message indicating to disable invoking of a privacy sensor to the privacy sensor service module, and correspondingly, the privacy sensor service module receives the message indicating to disable the invoking of the privacy sensor.

S1308: The privacy sensor service module sets a flag bit to block the invoking of the privacy sensor.

For example, the flag bit represents an invoking status of the privacy sensor. Specifically, the flag bit represents that the invoking status of the privacy sensor is enabled or disabled, or the flag bit represents whether the invoking of the privacy sensor is allowed. Specifically, the flag bit may be set to true or false. When the flag bit is true, it represents that the invoking is allowed or the invoking status is enabled. When the flag bit is false, it represents that the invoking is rejected or the invoking status is disabled. It should be understood that the setting of the flag bit is merely an example rather than a limitation. For example, the flag bit may alternatively be set to 0 or 1. When the flag bit is 1, it represents that the invoking is allowed or the invoking status is enabled. When the flag bit is 0, it represents that the invoking is rejected or the invoking status is disabled. It should be further understood that a correspondence between a specific value of the flag bit and a meaning represented by the value is not limited in embodiments of this application. It should be further understood that the correspondence between the specific value of the flag bit and the meaning represented by the value may be predefined, or may be configured. This is not limited in embodiments of this application.

S1309: The user of the in-vehicle infotainment completes a projection reverse control operation.

For example, the projection reverse control operation is used to trigger a second event.

S1310: The reverse control receiving module receives the second event.

The sensitive sensor of the tablet needs to be invoked for processing corresponding to the second event. For example, the processing corresponding to the second event may be starting an application in the second device.

Optionally, in S1311, the privacy sensor service module calls back a message indicating that the application invokes the sensitive sensor to the reverse control receiving module, and correspondingly, the reverse control receiving module receives the message indicating that the application invokes the sensitive sensor.

S1312: The reverse control receiving module reminds an operator of a cause of the invoking failure.

In this manner, when a tablet screen is turned off, the in-vehicle infotainment can still control the tablet by performing a local operation. In addition, the tablet rejects, by using the privacy sensor service module, invoking of the sensitive sensor by a user operation. This protects user privacy and improves user experience.

It should be understood that the method is applicable to the foregoing embodiments, for example, in the foregoing projection reverse control scenario. Specifically, the method may be applicable to the foregoing methods in FIG. 4 to FIG. 11.

It should be further understood that the tablet and the in-vehicle infotainment are used as an example in the foregoing procedure, but this application is not limited thereto. For example, the in-vehicle infotainment may alternatively turn off a screen, and reject invoking of a privacy sensor of the in-vehicle infotainment by the tablet. For another example, the first device and the second device may be different displays of a same device, for example, an in-vehicle screen 1 and an in-vehicle screen 2. For another example, the communication system may further include more devices. For example, the interaction may be between a mobile phone, a tablet, and an in-vehicle infotainment. For brevity, no examples are provided herein.

It should be further understood that embodiments of this application may be further applied to a multi-device multi-screen scenario. If a plurality of devices share one system with a plurality of screens, for a specific solution, refer to the description in FIG. 11. If the plurality of devices belong to different systems, and each system manages a plurality of screens, for a solution in a same system, refer to the description in FIG. 11. For a cross-system (or multi-system) solution, refer to the description in FIG. 5 to FIG. 8. Details are not described herein again.

It should be further understood that, in embodiments of this application, the full-screen transparent floating window covers a display area of the managed and controlled device, or in other words, the full-screen transparent floating window covers a display area of the device that is under input management and control. For example, in an interaction process between the tablet and the in-vehicle infotainment, when the tablet is under the input management and control, the full-screen transparent floating window covers a display of the tablet. Between a plurality of screens belonging to a same system, the full-screen transparent floating window covers a screen under the input management and control. For example, in an interaction process between the in-vehicle screen 1 and the in-vehicle screen 2, the in-vehicle screen 2 is under the input management and control, and the full-screen transparent floating window covers the in-vehicle screen 2. In conclusion, the first device in this application may be an electronic device, for example, a tablet, or may be a screen, for example, a tablet screen or an in-vehicle screen. The first device is a device under the input management and control, and the full-screen transparent floating window is displayed on the device under the input management and control.

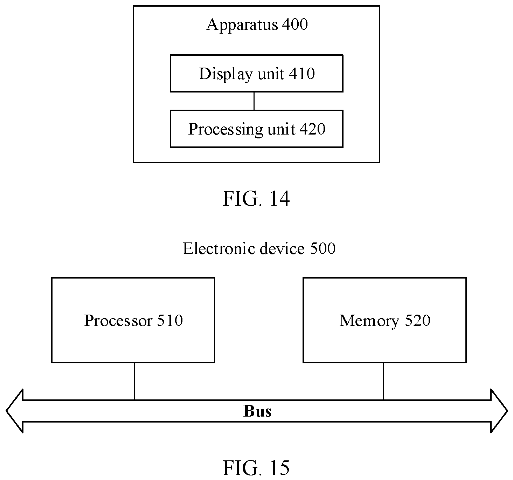

The following describes an apparatus according to an embodiment of this application with reference to FIG. 14 to FIG. 15.

FIG. 14 is a block diagram of an apparatus according to an embodiment of this application. The apparatus may be disposed in the in-vehicle device or the electronic device described in FIG. 4 to FIG. 13.

For example, as shown in FIG. 14, the apparatus 400 includes a display unit 415 and a processing unit 420.

In an implementation, the display unit 415 is configured to perform display-related steps of the second device (for example, the in-vehicle infotainment) in embodiments described in FIG. 4 to FIG. 13, and the processing unit 420 is configured to perform processing-related steps of the second device (for example, the in-vehicle infotainment) in embodiments described in FIG. 4 to FIG. 13.

Optionally, in some embodiments, the apparatus may further include a play unit. The play unit is configured to perform play-related steps of the second device (for example, the in-vehicle infotainment) in embodiments described in FIG. 4 to FIG. 13.

In another implementation, the display unit 415 is configured to perform display-related steps of the first device (for example, the tablet) in embodiments described in FIG. 4 to FIG. 13, and the processing unit 420 is configured to perform processing-related steps of the first device (for example, the tablet) in embodiments described in FIG. 4 to FIG. 13.

Optionally, in some embodiments, the apparatus may further include a play unit. The play unit is configured to perform play-related steps of the electronic device in the embodiment described in FIG. 8.

FIG. 15 is a diagram of a structure of an electronic device 500 according to an embodiment of this application.

For example, as shown in FIG. 15, the electronic device 500 includes one or more processors 515 and one or more memories 520. The one or more memories 520 store one or more computer programs, and the one or more computer programs include instructions. When the instructions are run by the one or more processors 515, the second device (for example, the in-vehicle infotainment) in FIG. 4 to FIG. 13 is enabled to perform the technical solutions in embodiments in FIG. 4 to FIG. 13, or the first device (for example, the tablet) in FIG. 4 to FIG. 13 is enabled to perform the technical solutions in embodiments in FIG. 4 to FIG. 13.

An embodiment of this application provides a computer program product. When the computer program product runs on an electronic device, the electronic device is enabled to perform the technical solutions in the foregoing embodiments. An implementation principle and technical effect thereof are similar to those of the foregoing related embodiments. Details are not described herein again.

An embodiment of this application provides a readable storage medium. The readable storage medium includes instructions. When the instructions are run on an electronic device, the electronic device is enabled to perform the technical solutions of the foregoing embodiments. An implementation principle and technical effect thereof are similar. Details are not described herein again.

An embodiment of this application provides a chip. The chip is configured to execute instructions. When the chip runs, the technical solutions in the foregoing embodiments are performed. An implementation principle and technical effect thereof are similar. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device management method, applied to a system comprising a first device and a second device, wherein an interface of the first device is projected to the second device for display, and the method comprises:
receiving, by the first device, a first event, wherein the first event is triggered by a first operation, and the first operation is a local operation on the first device; and
when an input management and control status is enabled, and a location of the first operation is in a first area, blocking, by the first device, transfer of the first event, wherein the input management and control status being enabled indicates that the local operation on the first device is managed and controlled; or
when the input management and control status is enabled, and the location of the first operation is in a second area, adjusting, by the first device, the input management and control status to disabled, wherein the input management and control status being disabled indicates that the local operation on the first device is not managed and controlled, the first area and the second area each are a part of a display area of the first device, and the first area and the second area do not overlap.

2. The method according to claim 1, wherein the method further comprises:
when the input management and control status is disabled, allowing, by the first device, the transfer of the first event.

3. The method according to claim 1 or 2, wherein the method further comprises:
receiving, by the first device, a first message, wherein the first message indicates to adjust the input management and control status to enabled.

4. The method according to any one of claims 1 to 3, wherein the method further comprises:
when the input management and control status is enabled, displaying, by the first device, a full-screen transparent floating window, wherein the full-screen transparent floating window covers the display area of the first device.

5. The method according to claim 4, wherein the full-screen transparent floating window comprises the second area.

6. The method according to any one of claims 1 to 5, wherein the first event corresponds to screen-off processing, and when the input management and control status is disabled, the method further comprises:
performing, by the first device, screen-off processing.

7. The method according to any one of claims 1 to 6, wherein the method further comprises:
receiving, by the first device, indication information from the second device, wherein the indication information indicates to turn off a screen, and the indication information is triggered by a local reverse control operation of the second device; and
the performing, by the first device, screen-off processing comprises:
performing, by the first device, screen-off processing based on the indication information.

8. The method according to claim 6 or 7, wherein the method further comprises:
receiving, by the first device, a second event, wherein the second event is triggered by a projection reverse control operation from the second device; and
performing, by the first device, processing corresponding to the second event in response to the second event.

9. The method according to claim 8, wherein the method further comprises:
when the processing corresponding to the second event invokes a sensitive sensor of the first device, blocking, by the first device, the invoking.

10. A computer-readable storage medium, comprising computer instructions, wherein when the computer instructions are run on an electronic device, the electronic device is enabled to perform the method according to any one of claims 1 to 9.

11. A chip system, comprising a processor, configured to invoke and run a computer program from a memory, so that an electronic device on which the chip system is installed performs the display method according to any one of claims 1 to 9.

12. An electronic device, wherein the electronic device comprises a display, a memory, and one or more processors, the memory is configured to store computer program code, the computer program code comprises computer instructions, and when the computer instructions are executed by the one or more processors, the electronic device is enabled to perform the method according to any one of claims 1 to 9.

13. A device management method, applied to a system comprising a first device and a second device, wherein an interface of the first device is projected to the second device for display, and the method comprises:
receiving, by the first device, a first reverse control event, wherein the first reverse control event is triggered by a local reverse control operation of the second device;
performing, by the first device, processing corresponding to the first reverse control event in response to the first reverse control event;
receiving, by the first device, a first local event, wherein an operation corresponding to the first local event is in a first area;
in response to the first local event, skipping, by the first device, performing processing corresponding to the first local event;
receiving, by the first device, a second local event, wherein an operation corresponding to the second local event is in a second area, the first area and the second area each are a part of a display area of the first device, and the first area and the second area do not overlap; and
performing, by the first device, processing corresponding to the second local event in response to the second local event.

14. The method according to claim 13, wherein the processing corresponding to the second local event is adjusting an input management and control status of the first device to be disabled, wherein the input management and control status being disabled indicates that a local operation on the first device is not managed and controlled.

15. The method according to claim 13 or 14, wherein after the performing, by the first device, processing corresponding to the second local event in response to the second local event, the method further comprises:
receiving, by the first device, a third local event, wherein an operation corresponding to the third local event is at any location in the display area of the first device; and
performing, by the first device, processing corresponding to the third local event in response to the third local event.

16. The method according to claim 13, wherein the method further comprises:
receiving, by the first device, a second reverse control event, wherein the second reverse control event is triggered by a local reverse control operation of the second device;
performing, by the first device, a screen-off operation in response to the second reverse control event;
receiving, by the first device, a third reverse control event, wherein the third reverse control event is triggered by a local reverse control operation of the second device; and
starting, by the first device, a first application in response to the third reverse control event.

17. The method according to claim 13, wherein the method further comprises:
receiving, by the first device, a fourth local event, wherein the fourth local event indicates the first device to turn off a screen;
performing, by the first device, a screen-off operation in response to the fourth local event;
receiving, by the first device, a fourth reverse control event, wherein the fourth reverse control event is triggered by a local reverse control operation of the second device; and
starting, by the first device, a first application in response to the fourth reverse control event.

18. The method according to claim 16 or 17, wherein the method further comprises:
when the first application invokes a sensitive sensor of the second device, prompting, on the first device and/or the second device, that the invoking fails.

19. A device management system, comprising the first device and the second device according to any one of claims 13 to 18.
